(19) Europäisches Patentamt
European Patent Office
Office européen des brevets

(11) **EP 4 769 336 A1**

(12) **EUROPEAN PATENT APPLICATION**

(43) Date of publication:
**01.07.2026 Bulletin 2026/27**

(21) Application number: **25224185.6**

(22) Date of filing: **17.12.2025**

(51) International Patent Classification (IPC):
**G06V 20/10** (2022.01)    **A01D 34/00** (2006.01)
**G05D 1/00** (2024.01)

(52) Cooperative Patent Classification (CPC):
**G06V 20/188; A01D 34/008; G05D 1/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 JP 2024233085**

(71) Applicant: **HONDA MOTOR CO., LTD.**
**Tokyo 105-8404 (JP)**

(72) Inventors:
• **OCHIAI, Patrick Yoshihiro**
  **3510193 Wako-shi, Saitama (JP)**
• **NISHIMIYA, Kenji**
  **3510193 Wako-shi, Saitama (JP)**
• **SHAH, Nikunj**
  **3510193 Wako-shi, Saitama (JP)**

(74) Representative: **Kiwit, Benedikt**
**Mitscherlich PartmbB**
**Karlstraße 7**
**80333 München (DE)**

(54) **INFORMATION PROVIDING METHOD, SERVER DEVICE, INFORMATION PROCESSING DEVICE, INFORMATION PROCESSING SYSTEM, PROGRAM, AND STORAGE MEDIUM**

(57)    An information providing method provides information to a work-related person including any one of a worker who performs work on a work site, a supervisor who supervises the worker, a manager of the work site, and an owner of the work site. The information providing method includes: an acquisition step of acquiring a state of the work site; a generation step of generating display information to be displayed on a display unit of a terminal, used by the work-related person, based on the state of the work site; and a display step of displaying the display information on the display unit.

F I G. 8

**Description**

BACKGROUND OF THE INVENTION

Field of the Invention

The present invention relates to an information providing method, a server device, an information processing device, an information processing system, a program, and a storage medium.

Description of the Related Art

International Publication No. 2020/090038 discloses a technique for specifying the content of a failure having occurred in a work site on the basis of a captured image of the work site, and controlling an autonomous work machine on the basis of the specified content of the failure.

However, with the technique described in International Publication No. 2020/090038, it is difficult to visualize work results, and it is necessary for a work-related person to capture an image at the site after work or to perform work report by performing site confirmation.

The present invention has been made in view of the above problem, and provides a technique that enables easy confirmation of a work result at a work site by visualizing and displaying the work result.

SUMMARY OF THE INVENTION

The present invention in its first aspect provides an information providing method as specified in claims 1 to 11.

The present invention in its second aspect provides a server device as specified in claim 12.

The present invention in its third aspect provides an information processing device as specified in claim 13.

The present invention in its fourth aspect provides an information processing system as specified in claim 14.

The present invention in its fifth aspect provides a program as specified in claim 15.

The present invention in its sixth aspect provides a storage medium as specified in claim 16.

The present invention makes it possible to provide a technique that enables easy confirmation of a work result at a work site by visualizing and displaying the work result.

BRIEF DESCRIPTION OF THE DRAWINGS

FIG. 1 is a diagram illustrating a configuration example of an information processing system according to one embodiment;

FIG. 2 is a diagram illustrating an example of a hardware configuration of a work machine according to the embodiment;

FIG. 3 is a diagram illustrating an example of a hardware configuration of a server device according to the embodiment;

FIG. 4 is a diagram illustrating an example of a hardware configuration of an information processing device according to the embodiment;

FIG. 5 is a diagram illustrating an example of a functional configuration of the server device according to the embodiment;

FIG. 6 is a diagram illustrating a processing procedure in the information processing system according to the embodiment;

FIG. 7 is a diagram illustrating a processing procedure in the information processing system according to the embodiment;

FIG. 8 is a diagram illustrating an example of a processing sequence in the information processing system according to the embodiment;

FIG. 9 is a diagram illustrating a display example of display information according to the embodiment;

FIG. 10 is a diagram illustrating a display example of display information according to the embodiment;

FIG. 11 is a diagram illustrating a display example of display information according to the embodiment;

FIG. 12 is a diagram illustrating a display example of display information according to the embodiment;

FIG. 13 is a diagram illustrating a display example of display information according to the embodiment;

FIG. 14 is a diagram illustrating a display example of display information according to the embodiment;

FIG. 15 is a diagram illustrating a display example of display information according to the embodiment; and

FIG. 16 is an explanatory view of an attachment location of a state sensor according to the embodiment.

DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

<System Configuration>

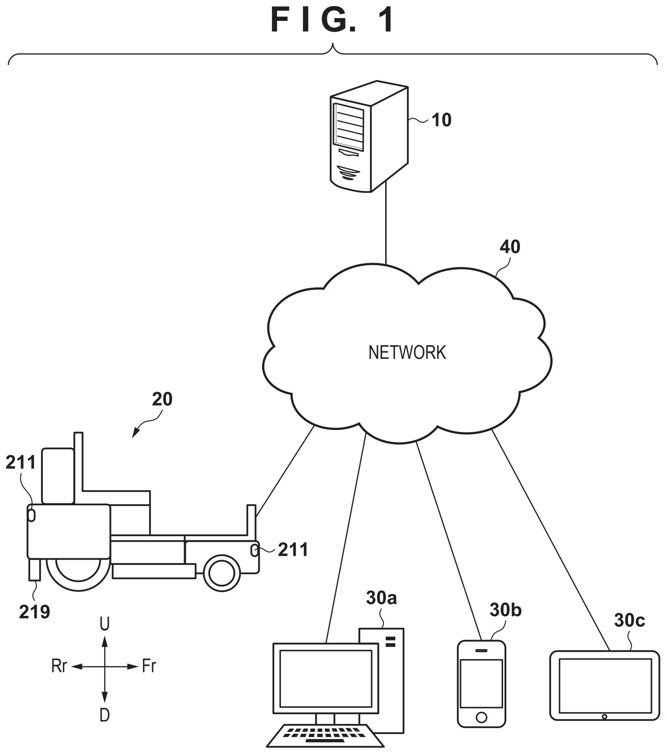

FIG. 1 is a diagram illustrating a configuration example of an information processing system according to the present embodiment. In FIG. 1, reference numeral 10 denotes a server device (information processing device). Reference numeral 20 denotes a work machine that is, for example, a grass mower or a lawn mower, but is not limited thereto. The work machine 20 according to the present embodiment is a riding work machine, but may also be operable as an autonomous work machine without being operated by an occupant. In addition, the work machine 20 may be an unmanned autonomous work machine. As the coordinate system of the work machine 20, Fr indicates the front, and Rr indicates the rear. In addition, U indicates the upper side, and D indicates the lower side. Reference numerals 30a to 30c denote information processing devices, which are terminal devices carried or owned by a user. Reference numeral 30a denotes a personal computer, reference numeral 30b denotes a smartphone, and reference numeral 30c denotes a tablet terminal. The user can use at least one of these devices. Any one of the information processing devices 30a to 30c is also referred to as an information processing device 30. The information processing device 30 is an information processing device (information providing device) that provides information to a work-related person including any one of a worker who performs work on a work site, a supervisor who supervises the worker, a manager of the work site, and an owner of the work site. In addition, the server device 10 may operate as the information processing device that provides information to the work-related person. Reference numeral 40 denotes a network. The server device 10, the work machine 20, and the information processing device 30 are connected via the network 40 in a communication-enabling manner.

<Hardware Configuration>

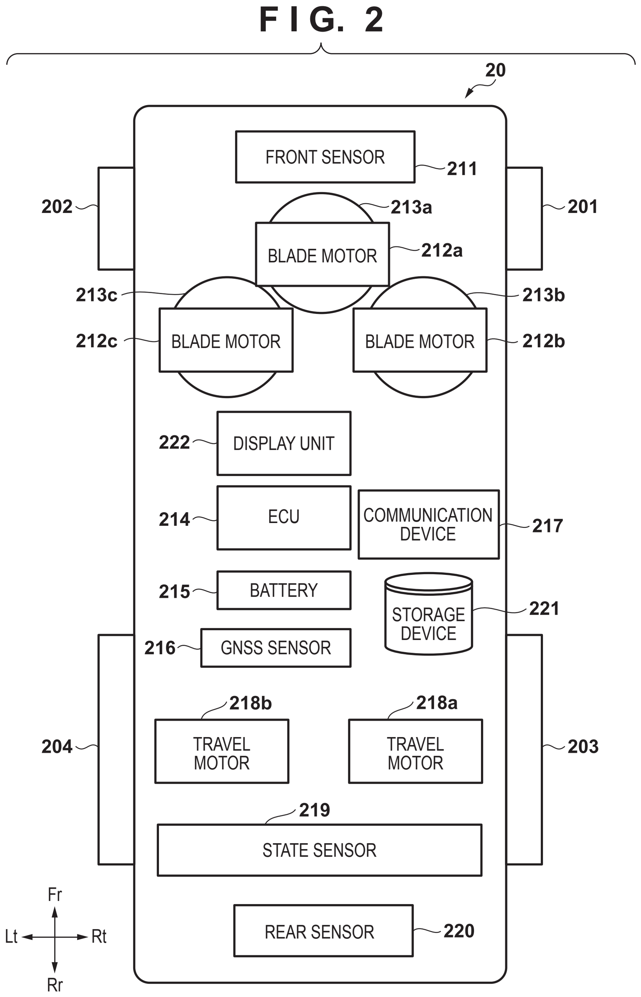

FIG. 2 is a diagram illustrating an example of a hardware configuration of the work machine 20 according to the present embodiment. The hardware configuration of the work machine 20 is a two-dimensional hardware configuration, and in the coordinate system illustrated in FIG. 2, Fr indicates the front, and Rr indicates the rear. In addition, Rt indicates the right side, and Lt represents the left side. The work machine 20 includes a right front wheel 201, a left front wheel 202, a right rear wheel 203, and a left rear wheel 204. In the present embodiment, the rear wheels are drive wheels. The work machine 20 further includes a front sensor 211, blade motors 212a to 212c, blades 213a to 213c, an ECU 214, a battery 215, a GNSS sensor 216, a communication device 217, travel motors 218a and 218b, a state sensor 219, and a rear sensor 220. The blade motors 212a to 212c are also collectively referred to as a blade motor 212. The blades 213a to 213c are also collectively referred to as a blade 213. The travel motors 218a and 218b are also collectively referred to as a travel motor 218. In addition, the work machine 20 includes a storage device 221 and a display unit 222 (display). The storage device 221 is one or more memories that store various types of information such as image information. The display unit 222 displays various types of information for the occupant of the work machine 20.

The front sensor 211 is a stereo camera that captures an image of the front of the work machine 20, for example. The stereo camera uses two optical cameras to acquire visible images, and the parallax of the two optical cameras can be utilized to acquire depth information of the unmowed lawn. In the stereo camera, two cameras are disposed in locations away from each other in the vehicle width direction (left-right direction) of the work machine 20, and the cameras capture the same scene from different viewpoints and analyze a difference (parallax) between the two images, thereby calculating a distance (depth) of each point. Here, the depth information is information regarding a distance to an object or a surface, and a location and a shape of the object in a three-dimensional space can be grasped. By acquiring the depth information of the lawn, it is possible to acquire detailed information such as the height and unevenness of the lawn. The stereo camera in the front sensor 211 may use the two optical cameras to acquire depth information of the unmowed lawn, and may use the acquired depth information to generate a three-dimensional image (three-dimensional image model) of the unmowed lawn.

The blade motor 212 drives the blade 213. The ECU 214 is an electronic control unit, and controls various operations of the work machine 20. The battery 215 is a drive source of the work machine 20. Note that although three sets of the blade 213 and the blade motor 212 for driving the blade are provided in the present embodiment, the number thereof is not limited.

The GNSS sensor 216 is a sensor that receives a satellite signal of a global navigation satellite system. A location of the work machine 20 can be measured using the signal received by the GNSS sensor 216. The communication device 217 performs wired and/or wireless communication with another device. The travel motor 218a drives the right rear wheel 203. The travel motor 218b drives the left rear wheel 204. The travel motors are individually operable and capable of performing a turning operation at the spot.

The state sensor 219 is a sensor for detecting a state (for example, state of soil) of a work site. The state sensor 219 may include a soil sensor that monitors the state of soil. The soil sensor is a sensor capable of monitoring and visualizing the state (electrical conductivity (EC)) of soil in agriculture or the like. There is a correlation between an EC value and a nutrient concentration in soil, and the EC (electrical conductivity) is higher as the nutrient content in soil increases. A nutritional state of land can be evaluated from a detection value of the soil sensor.

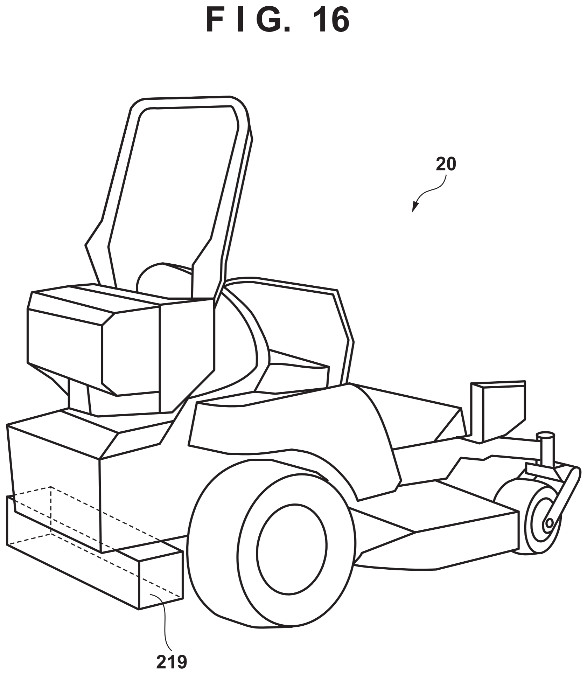

As illustrated in FIG. 16, for example, the state sensor 219 is a rod-shaped sensor provided on a lower surface at the rear of the work machine 20 and extending in the left-right direction so as to be directed rearward and downward in a traveling direction of the work machine 20, and can detect a state of a location where the work machine 20 has traveled. For example, since the state sensor 219 extends from the right rear wheel 203 to the left rear wheel 204, it is possible to detect the state of the work site in a wide range by one travel. Note, however, that the state sensor 219 is not limited to extending in the left-right direction, and may extend in an oblique direction with respect to the traveling direction of the work machine 20 or may extend in a direction parallel to the traveling direction.

The rear sensor 220 includes, for example, a stereo camera that images the rear side of the work machine 20, and a near infrared (NIR) camera (hereinafter also referred to as NIR camera or near infrared camera). The stereo camera of the rear sensor 220 has a configuration similar to that of the stereo camera of the front sensor 211. That is, the stereo camera in the rear sensor 220 may use the two optical cameras to acquire a visible image and utilize the parallax of the two optical cameras to acquire depth information of the mowed lawn, and use the acquired depth information to generate a three-dimensional image (three-dimensional image model) of the mowed lawn.

A near infrared (NIR) camera is a camera that detects light in a near infrared (NIR) area having a longer wavelength than visible light, and can detect information invisible to the naked eye. Plants such as a lawn have a property of strongly reflecting near infrared rays and absorbing red visible light, for example. The NIR camera is equipped with a sensor for detecting near infrared rays, and the sensor of the NIR camera can acquire an image (hereinafter also referred to as NIR image) of near infrared rays reflected from a lawn. A filter that removes visible light and allows only near infrared rays to pass may be used for a near infrared (NIR) camera.

By using the image information (visible image) acquired by the stereo camera of the rear sensor 220 and the image information (near infrared image) acquired by the NIR camera, it is possible to acquire an index (normalized difference vegetation index (NDVI)) indicating the quality of vegetation such as the distribution status and the growth state of a mowed lawn. For example, the image information (visible image) captured by the stereo camera of the rear sensor 220 includes images indicating wavelengths of red (R), green (G), and blue (B). It is possible to acquire an index (NDVI) indicating the quality of vegetation such as the distribution status and the growth state of a mowed lawn by using an R image indicating a wavelength of red (R) among the visible images and an NIR image.

Specifically, the index (NDVI) indicating the quality of vegetation can be acquired by the following equation.

$$NDVI = (NIR - RED)/(NIR + RED)$$

NIR: Wavelength of near infrared rays in NIR image (reflectance)
RED: Red wavelength in visible image (reflectance)

By combining the NDVI with location information of the work site acquired by the GNSS sensor 216, an image (NDVI image) on which the distribution of the index (NDVI) in the work site is superimposed can be generated. The NDVI image is an image obtained by visualizing the distribution of the index (NDVI) indicating the quality of vegetation of a lawn in a work site. The NDVI is represented by a numerical value normalized between -1 and 1, and has a feature that the NDVI value increases when vegetation is dense (when vegetation of lawn is good). When the NDVI image of a work site is generated, a location with good vegetation and a location with poor vegetation can be visualized. Such NDVI data may be acquired as information indicating a state of the work site. It can be determined that a place where the NDVI value is low is a place where the lawn growth state is poor (place where vegetation of lawn is poor), and a place where the NDVI value is high is a place where the lawn growth state is good (place where vegetation of lawn is good).

In the above description, a configuration in which the NIR camera is included in the rear sensor 220 has been described, but the present invention is not limited to this configuration, and the NIR camera may be included in the state sensor 219. The state sensor 219 may include a sensor (or camera) for detecting at least one of a cut state of the lawn, a growth state of the lawn, and a health state of the lawn, and the front sensor 211 and/or the rear sensor 220 may also be collectively referred to as the state sensor 219. That is, the state sensor 219 may be a sensor for detecting, as the state of the work site, at least one of the cut state of the lawn, the growth state of the lawn, the health state of the lawn, and the state of soil.

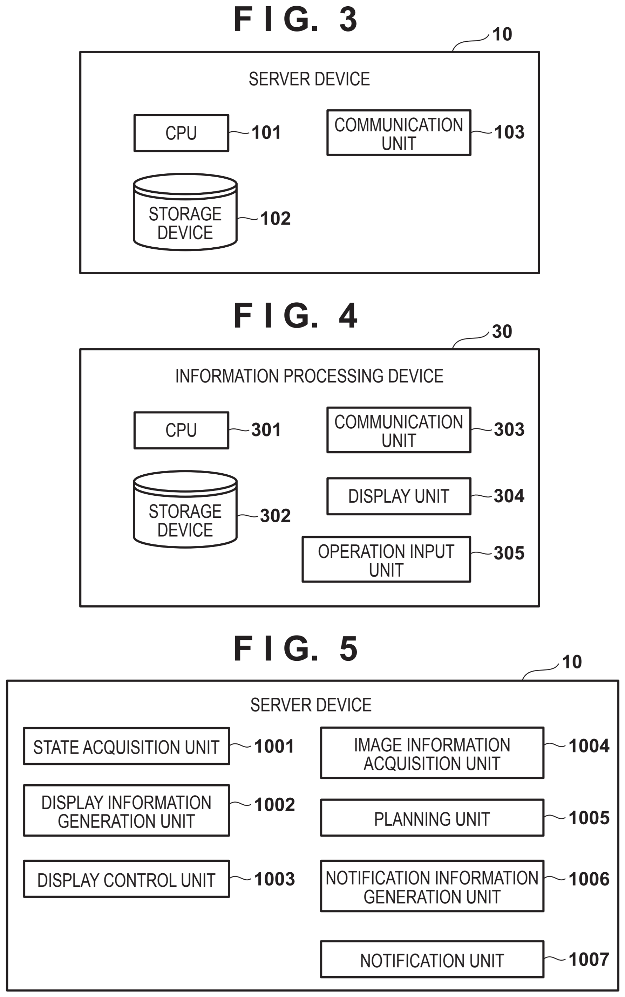

FIG. 3 is a diagram illustrating an example of a hardware configuration of the server device 10 according to the present embodiment. The server device 10 includes a CPU 101, a storage device 102, and a communication unit 103. A control operation of the server device 10 is achieved by the CPU 101 reading and executing a computer program stored in the storage device 102. The CPU 101 may be one or more CPUs. The storage device 102 is one or more memories that store several types of information. For example, information that has been received from another device, a computer program to be read and executed by the CPU 101, and the like are stored. The communication unit 103 has a function of communicating with another device in a wired or wireless manner through the network 40.

FIG. 4 is a diagram illustrating an example of a hardware configuration of the information processing device 30 according to the present embodiment. The information processing device 30 includes a CPU 301, a storage device 302, a communication unit 303, a display unit 304, and an operation input unit 305. A control operation of the information processing device 30 is achieved by the CPU 301 reading and executing a computer program stored in the storage device 302. The CPU 301 may be one or more CPUs. The storage device 302 is one or more memories that store several types of information. For example, information that has been received from another device, a computer program to be read and executed by the CPU 301, and the like are stored.

The communication unit 303 has a function of communicating with another device in a wired or wireless manner through the network 40. The display unit 304 displays various types of information to the user. The operation input unit 305 receives an operation input from the user. The operation input unit 305 can include a keyboard, a mouse, a touch panel, and the like.

<Functional Configuration>

Next, an example of a functional configuration of the server device 10 according to the present embodiment will be described with reference to FIG. 5. The server device 10 includes a state acquisition unit 1001, a display information generation unit 1002, a display control unit 1003, an image information acquisition unit 1004, a planning unit 1005, a notification information generation unit 1006, and a notification unit 1007. These functional configurations may be implemented by the CPU 101 executing a predetermined program, or if they perform similar functions, they may be configured by an integrated circuit or the like.

The state acquisition unit 1001 acquires a state of a work site. The state of the work site may be acquired by a sensor or a camera mounted on the work machine 20 that performs work at the work site. Alternatively, the state of the work site may be acquired by a sensor or a camera fixed to the work site. Furthermore, the state of the work site may be acquired by a sensor or a camera mounted on an autonomous flying object that flies above the work site. The state acquisition unit 1001 can acquire the state of the work site by receiving the state of the work site from the work machine 20, the autonomous flying object, or a fixedly installed sensor or camera.

The image information acquisition unit 1004 acquires image information of the work site. For example, the image information (captured image) of the work site captured by the front sensor 211 and/or the rear sensor 220 of the work machine 20 is received and acquired from the work machine 20. The image information of the work site may include, for example, a visible image and depth information of the unmowed lawn acquired by the front sensor 211, and a visible image and depth information of the mowed lawn acquired by the rear sensor 220. In addition, the image information of the work site may include a near infrared image (NIR image) of the lawn acquired by the NIR camera.

On the basis of the image information of the work site acquired by the image information acquisition unit 1004, the display information generation unit 1002 generates display information to be displayed on the display unit 304 of the information processing device 30 (terminal device used by work-related person). The display information generation unit 1002 generates a three-dimensional image (three-dimensional image model) of the unmowed lawn by using the visible image and the depth information of the unmowed lawn acquired by the front sensor 211. In addition, the display information generation unit 1002 generates a three-dimensional image (three-dimensional image model) of the mowed lawn by using the visible image and the depth information of the mowed lawn acquired by the rear sensor 220. The state of the work site acquired by the state acquisition unit 1001 includes color information of the work site, and the display information generation unit 1002 generates a colored three-dimensional image model on the basis of the color information of the work site.

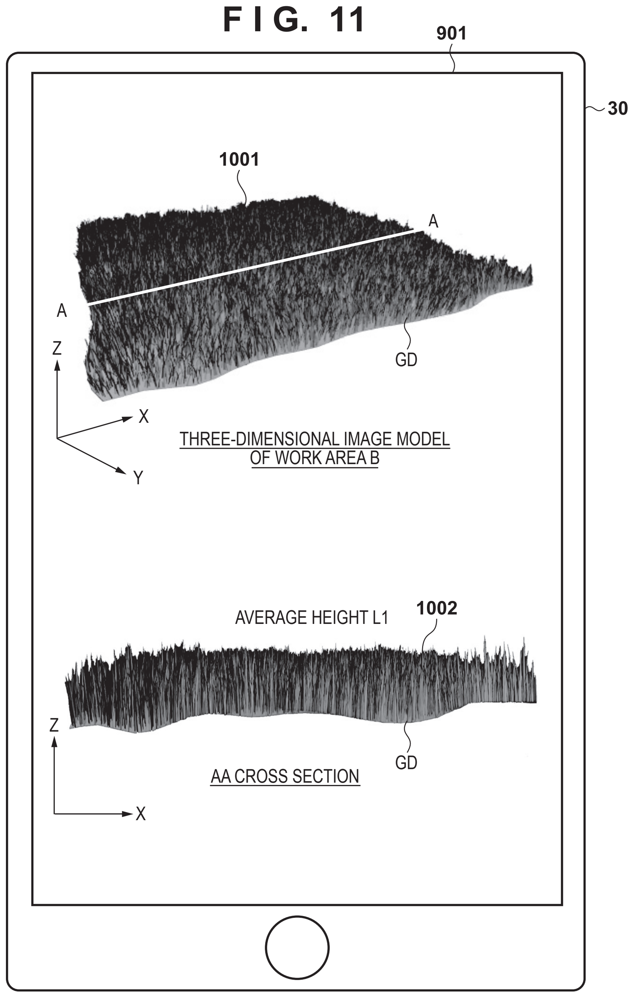

The display information generation unit 1002 can generate a three-dimensional image (three-dimensional image model) for the entire area of the work site or a partial area in the work site designated by a work-related person. In addition, the display information generation unit 1002 can generate a two-dimensional image (two-dimensional image model) for a cross section (cut surface: XZ plane in FIG. 11) in a predetermined vertical direction at a location designated by a work-related person in the three-dimensional image (three-dimensional image model). In addition, the display information generation unit 1002 can generate a two-dimensional image (two-dimensional image model) for a cross section (cut surface: XY plane in FIG. 11) in a predetermined horizontal direction at a location designated by a work-related person in the three-dimensional image (three-dimensional image model). The state of the work site acquired by the state acquisition unit 1001 includes color information of the work site, and the display information generation unit 1002 generates a colored two-dimensional image model on the basis of the color information of the work site.

In addition, the display information generation unit 1002 uses the image information (visible image) acquired by the stereo camera of the rear sensor 220 and the image information (near infrared image) acquired by the NIR camera to generate an index (NDVI) indicating the quality of vegetation such as the distribution status and the growth state of a mowed lawn. In addition, the display information generation unit 1002 combines the three-dimensional location information of the work site acquired by the GNSS sensor 216 with the index (NDVI), thereby generating an image (NDVI image) on which the distribution of the index (NDVI) indicating the quality of vegetation such as the distribution status and the growth state of a mowed lawn in the work site is superimposed. Moreover, the display information generation unit 1002 can generate an NDVI image for the entire area of the work site or a partial area in the work site designated by a work-related person.

The display information generation unit 1002 may generate display information to be displayed on the display unit 304 of the information processing device 30 on the basis of the state of the work site acquired by the state acquisition unit 1001, and generate display information to be displayed on the display unit 304 of the information processing device 30 together with the image information of the work site acquired by the image information acquisition unit 1004.

The display control unit 1003 transmits the display information generated by the display information generation unit 1002 to the information processing device 30, and causes the display unit 304 of the information processing device 30 to display the display information.

The planning unit 1005 plans work in the work site on the basis of the image information of the work site acquired by the image information acquisition unit 1004 and the state of the work site acquired by the state acquisition unit 1001. The notification information generation unit 1006 generates notification information for notifying the information processing device 30 (terminal device used by work-related person) of work planned by the planning unit 1005. The notification unit 1007 notifies the information processing device 30 (terminal device used by work-related person) of the notification information generated by the notification information generation unit 1006. The notification can be performed by transmitting the notification information to the information processing device 30.

<Processing>

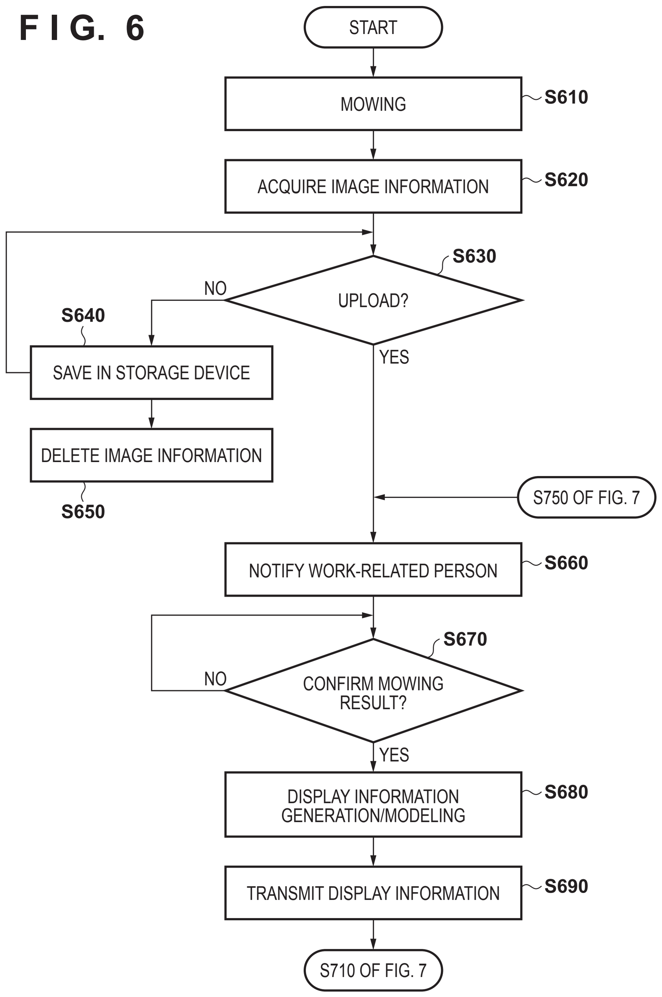

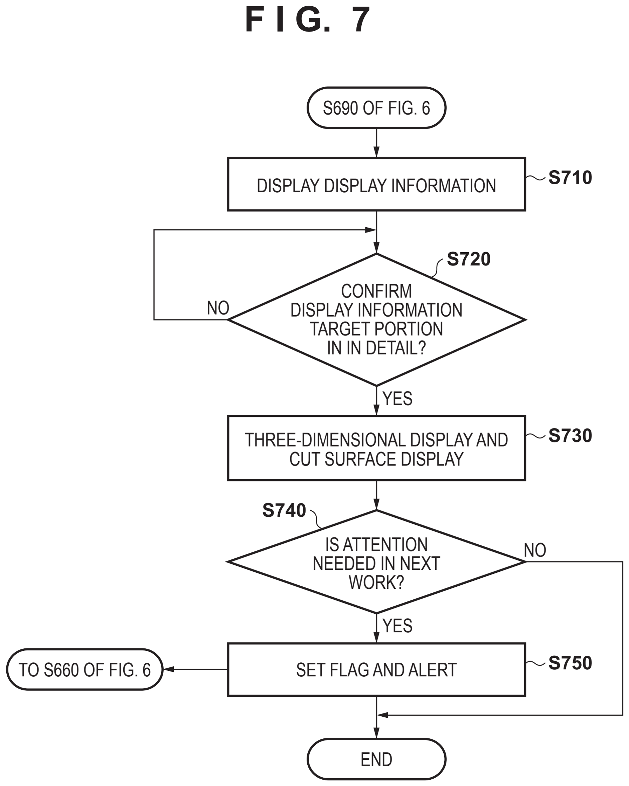

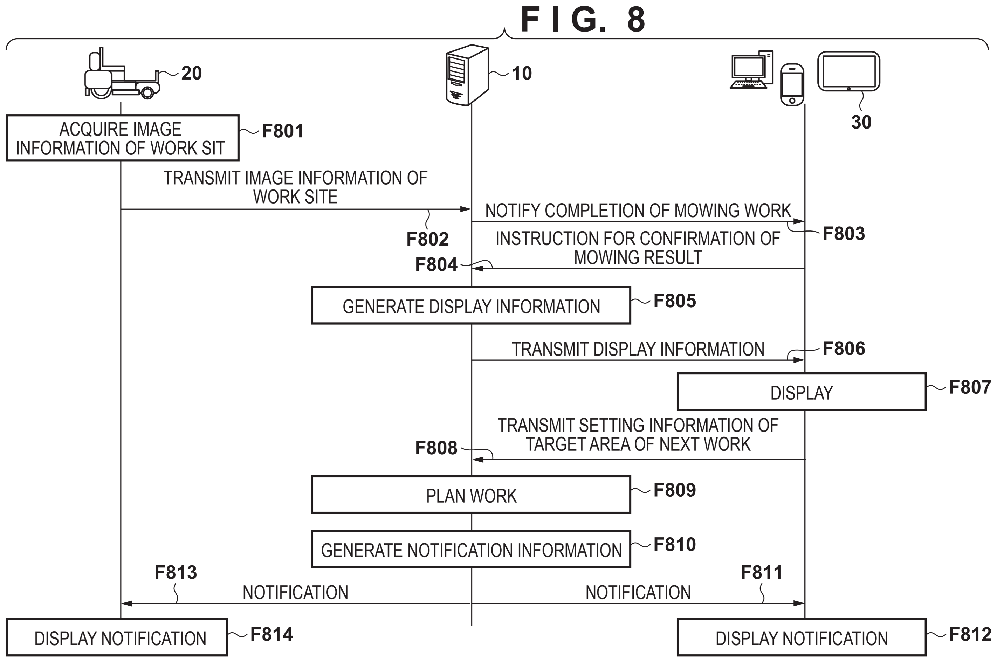

FIGS. 6 and 7 are diagrams illustrating a processing procedure performed by the information processing system according to the present embodiment. Furthermore, FIG. 8 is a diagram illustrating an example of a processing sequence in the information processing system. In S610, the work machine 20 travels on the work site under the control of the ECU 214, and performs mowing work on the work site. In S620, the front sensor 211 and the rear sensor 220 of the work machine 20 acquire image information of the work site (F801 in FIG. 8). Note that in this step, the state sensor 219 of the work machine 20 may acquire the state of the work site (for example, state of soil) together with the image information of the work site. In the following description, it is assumed that the image information of the work site can include the state of the work site.

In S630, the ECU 214 of the work machine 20 determines whether to upload the image information acquired by the front sensor 211 and the rear sensor 220 to the server device 10. When the image information is not uploaded to the server device 10 (S630-NO), the image information is saved in the storage device 221 of the work machine 20, and standby is performed to wait for the upload of the image information. On the other hand, when the image information is uploaded to the server device 10 (S630-YES), the processing proceeds to S660. After the upload of the image information is completed, the image information saved in the storage device 221 of the work machine 20 is deleted (S650). Upon completion of the upload, the image information acquisition unit 1004 of the server device 10 acquires image information of the work site. The image information acquisition unit 1004 receives and acquires image information (captured image) of the work site captured by the front sensor 211 and/or the rear sensor 220 of the work machine 20 from the work machine 20 (F802 in FIG. 8). Note that in this step, when the upload is completed, the state acquisition unit 1001 of the server device 10 acquires the state of the work site transmitted together with the image information from the work machine 20.

In S660, the CPU 101 of the server device 10 notifies a work-related person including any one of a worker who performs the work on the work site, a supervisor who supervises the worker, a manager of the work site, and an owner of the work site of the completion of the mowing work by the work machine 20 (F803 in FIG. 8).

In S670, the work-related person determines whether to confirm the mowing result. When the mowing result is not to be confirmed (S670-NO), standby is performed to wait for an instruction from the work-related person. On the other hand, when the mowing result is to be confirmed (S670-YES), the work-related person inputs a confirmation instruction from the operation input unit 305. The confirmation instruction input from the operation input unit 305 is transmitted to the server device 10 (F804 in FIG. 8).

In S680, the display information generation unit 1002 of the server device 10 generates display information to be displayed on the display unit 304 of the information processing device 30 on the basis of the image information of the work site acquired by the image information acquisition unit 1004. The display information to be displayed on the display unit 304 can include visible images captured by the front sensor 211 and the rear sensor 220. Furthermore, the display information to be displayed on the display unit 304 can include a three-dimensional image (three-dimensional image model) of the lawn, and an image (NDVI image) on which a distribution of the index (NDVI) indicating the quality of vegetation such as the distribution status and the growth state of a mowed lawn is superimposed. A three-dimensional image (three-dimensional image model) of the lawn is a three-dimensional image model virtually modeled using visible images. In addition, the display information may include a two-dimensional image (two-dimensional image model) of the lawn in a predetermined cross section of the three-dimensional image model.

Moreover, in the display information, a plurality of evaluation values evaluated for each of a plurality of evaluation items are acquired as the state of the work site, and the display information generation unit 1002 generates the plurality of evaluation items and the plurality of evaluation values acquired as the state of the work site as the display information. The plurality of evaluation values evaluated for each of the plurality of evaluation items may be quantitative evaluation values acquired by image processing of the visible image. In addition, the work-related person may manually input a plurality of evaluation values for each of the plurality of evaluation items.

The display information generation unit 1002 generates, as the display information, a form represented in shapes of sizes proportional to the levels of the plurality of evaluation values for each of the plurality of evaluation items. The form represented in shapes of sizes proportional to the levels of the plurality of evaluation values for each of the plurality of evaluation items can include, for example, a radar chart, a bar graph, a line graph, and the like. Here, the quantitative evaluation value for each of the plurality of evaluation items may include, for example, evaluation items such as uniformity of the color of the lawn, the color of the lawn, the soil condition of the lawn, the height of the mowed lawn, the proportion of the lawn covering the ground (amount of lawn growing in predetermined area), and the regularity of the mowed surface. In addition, NDVI acquired using the visible image and the near infrared image may be included in the evaluation item in the display information. Note that the plurality of evaluation items is not limited to these, and can be changed or added by setting of a work-related person. By visualizing each of the plurality of evaluation items in shapes of sizes proportional to the levels of the plurality of evaluation values, it is possible to provide multifaceted evaluation results.

In S690, the display control unit 1003 of the server device 10 transmits the display information generated by the display information generation unit 1002 to the information processing device 30 (F806 in FIG. 8), and causes the display unit 304 of the information processing device 30 to display the display information.

Next, the processing proceeds to S710 in FIG. 7. In S710, the information processing device 30 displays the display information transmitted from the server device 10 on the display unit 304 (F807 in FIG. 8).

In S720, the work-related person refers to the display information (visible image, NDVI image, or the like of lawn) displayed on the display unit 304 to determine whether or not to confirm a target portion in detail. When the detailed confirmation of the target portion is not performed (S720-NO), standby is performed to wait for an instruction from the work-related person. On the other hand, when the detailed confirmation of the target portion is to be performed (S720-YES), the work-related person inputs a detailed confirmation instruction from the operation input unit 305. When the detailed confirmation instruction is input from the operation input unit 305, the CPU 301 of the information processing device 30 causes the display unit 304 to display a display (for example, three-dimensional image (three-dimensional image model), two-dimensional image (two-dimensional image model), radar chart, and the like) corresponding to the detailed confirmation instruction by using the display information transmitted from the server device 10. The CPU 301 can display the three-dimensional image model and the two-dimensional image model in combination or superimpose and display the NDVI image on the three-dimensional image model according to an instruction from the work-related person.

In S740, the work-related person refers to the display image (for example, visible image, three-dimensional image model, two-dimensional image model (image of cross section in vertical direction), and NDVI image of lawn) or the like displayed on the display unit 304 to determine whether there is an area requiring attention in the next work. When there is no target area for the next work (S740-NO), the processing is ended. On the other hand, when there is a target area for the next work (S740-YES), the work-related person inputs setting information of the target area for the next work from the operation input unit 305 in S750. The setting information of the target area of the next work input from the operation input unit 305 is transmitted to the server device 10 (F808 in FIG. 8).

The planning unit 1005 of the server device 10 plans the next work in the work site on the basis of the image information of the work site, the state of the work site, and the setting information of the target area of the next work transmitted from the information processing device 30 (F809 in FIG. 8). The notification information generation unit 1006 generates notification information for notifying the information processing device 30 (terminal device used by work-related person) of work planned by the planning unit 1005 (F810 in FIG. 8). Here, the notification information may include a flag that can identify an area to be noted in the next work. In addition, the notification information may include an alert for notifying that the work machine 20 has approached the area to be noted while the work machine 20 is traveling on the work site. The notification unit 1007 notifies the information processing device 30 (terminal device used by work-related person) of the notification information generated by the notification information generation unit 1006 (S660 in FIG. 6, F811 in FIG. 8). In addition, the notification unit 1007 may notify the work machine 20 of the notification information generated by the notification information generation unit 1006 (F813 in FIG. 8).

The notification information is displayed on the information processing device 30 before the start of the next work (F812 in FIG. 8). The work-related person can confirm in advance whether there is an area to be noted in the work site to be worked. In addition, it is possible to determine whether the state of the lawn in the area to be noted is improved with reference to display information (visible image, NDVI image, three-dimensional image model, two-dimensional image model, radar chart, and the like) obtained after the work.

In addition, in the next work, when the work machine 20 approaches a target area 1501, an alert 1502 for notifying that the work machine 20 has approached the target area 1501 may pop up on the display unit 222 of the work machine 20. The work machine 20 is an autonomous work machine that autonomously performs work on the work site. However, when the occupant gets on the work machine 20 and performs the operation, the alert 1502 pops up on the display unit 222, so that it is possible to confirm in advance that the work machine 20 has approached the target area 1501, and the work machine 20 can be operated so as to more carefully perform the mowing work.

<Display Example>

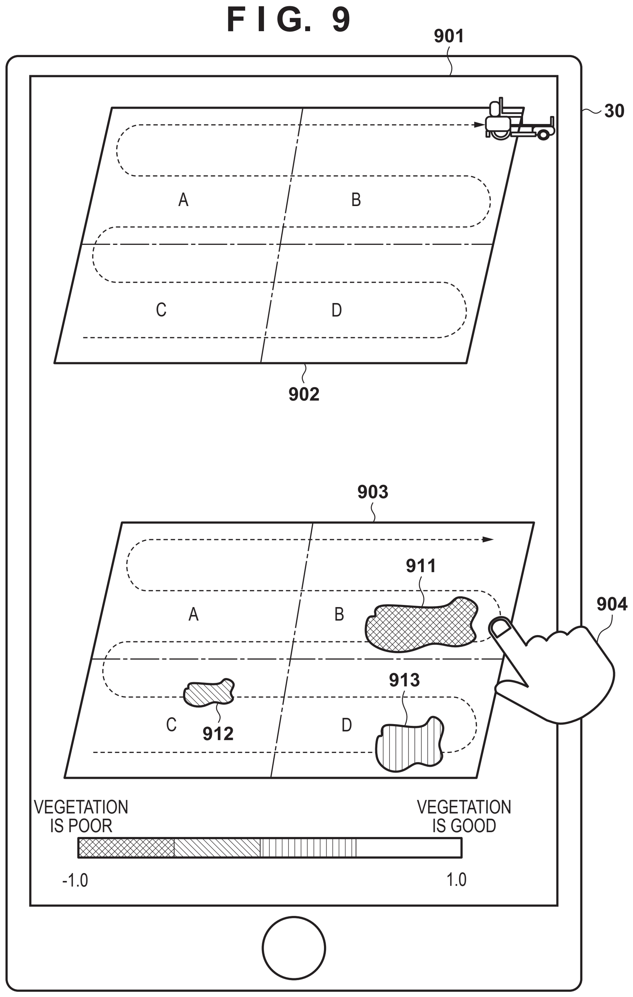

FIGS. 9 to 15 are diagrams illustrating display examples of the display information according to the present embodiment. The state acquisition unit 1001 may acquire a first state that is a state of the work site at a first time, and may acquire a second state that is a state of the work site at a second time after the first time. A display area of the display unit 304 that displays the display information includes a first display area that displays information indicating the first state, and a second display area that displays information indicating the second state. The first display area and the second display area can be displayed in the same screen of the display unit 304. The first display area and the second display area may be individually displayed by swiping the screen of the display unit 304. The display information includes geographical information indicating a geographical location of the work site, and the display information displayed on the display unit 304 is generated such that information indicating a state of the work site is displayed in a superimposed manner on the geographical information. The display information is generated such that the information indicating the state of the work site is superimposed and displayed on the image information.

As illustrated in FIG. 9, a display area 901 of the display unit 304 of the information processing device 30 (tablet terminal 30c) displays a visible image 902 of the work site captured by the stereo camera of the rear sensor 220 and an NDVI image 903 acquired using the NIR camera of the rear sensor 220. In the visible image 902 of the work site, A to D indicate four work areas of the work site.

In the NDVI image 903, a white area indicates an area where vegetation of the lawn is good (area of NDVI = 1). Areas 911 to 913 in the NDVI image 903 indicate areas where NDVI is lower than 1. The area 911 in a work area B indicates a distribution area having the lowest NDVI among the three areas (911 to 913), and the area 912 in a work area C indicates a distribution area having the second lowest NDVI among the three areas (911 to 913). Then, the area 913 in a work area D indicates a distribution area having the third lowest NDVI among the three areas (911 to 913). In FIG. 9, for simplification of illustration, NDVI is classified into four levels including three areas (911 to 913) and an area with good vegetation (white area). However, NDVI can be further subdivided and displayed in a range of -1 to 1.

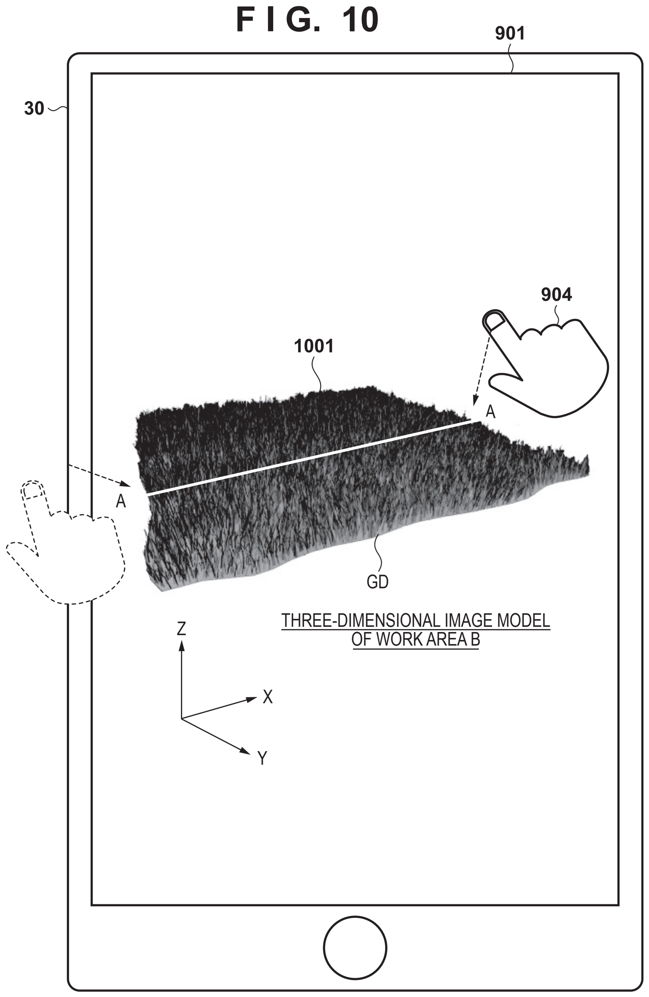

For example, when a user (for example, work-related person) 904 designates the work area B including the area 911 having the lowest NDVI among the three areas (911 to 913) in order to confirm the details, a three-dimensional image (three-dimensional image model) 1011 of the designated work area B is displayed in the display area 901 of the display unit 304 as illustrated in FIG. 10. The three-dimensional image model is a virtual model generated on the basis of the visible image, and in the three-dimensional image (three-dimensional image model) 1011, "GD" indicates undulations (irregularities) of the ground of the work site (lawn). The ground undulation GD can be acquired by combining the location information of the work site acquired by the GNSS sensor 216 during work of the work machine 20 and the visible image, and in the generation of the three-dimensional image model, the ground undulation GD is realistically modeled. The three-dimensional image (three-dimensional image model) 1011 can be rotationally displayed at an arbitrary angle around each three-dimensional axis (XYZ axis) by an operation of the user 904. The three-dimensional image model of the lawn can be generated so as to be changeable according to a direction of a designated viewpoint. Note that the designation of the work area is not limited to one area, and a plurality of work areas may be designated, or the entire work site including the work areas A to D can be designated.

For example, when the user (for example, work-related person) 904 designates an arbitrary location in the three-dimensional image (three-dimensional image model) 1011 in order to confirm details, a two-dimensional image (two-dimensional image model) 1012 of the designated location (AA) is displayed in the display area 901 of the display unit 304 as illustrated in FIG. 11. The two-dimensional image (two-dimensional image model) 1012 is obtained by modeling a cross section of the designated location (AA). In the two-dimensional image (two-dimensional image model) 1012, "GD" indicates undulations (irregularities) of the ground of the lawn when viewed from the AA cross-sectional direction (direction perpendicular to sheet surface). In the two-dimensional image (two-dimensional image model) 1012, an average height L1 of the mowed lawn may be displayed in combination. In addition to the average height L1 of the lawn, quantitative evaluation values such as uniformity of the color of the lawn, the color of the lawn, and the regularity of the mowed surface in the designated AA cross section may be displayed in combination with the two-dimensional image model.

Note that FIG. 11 illustrates an example in which the three-dimensional image model 1011 and the two-dimensional image model 1012 are displayed in one display area 901, but the present invention is not limited to this example. For example, the user 904 may designate a plurality of arbitrary locations in the three-dimensional image (three-dimensional image model) 1001, and the two-dimensional image model at a plurality of designated locations (cross sections) may be displayed in one display area 901 together with the three-dimensional image model 1011.

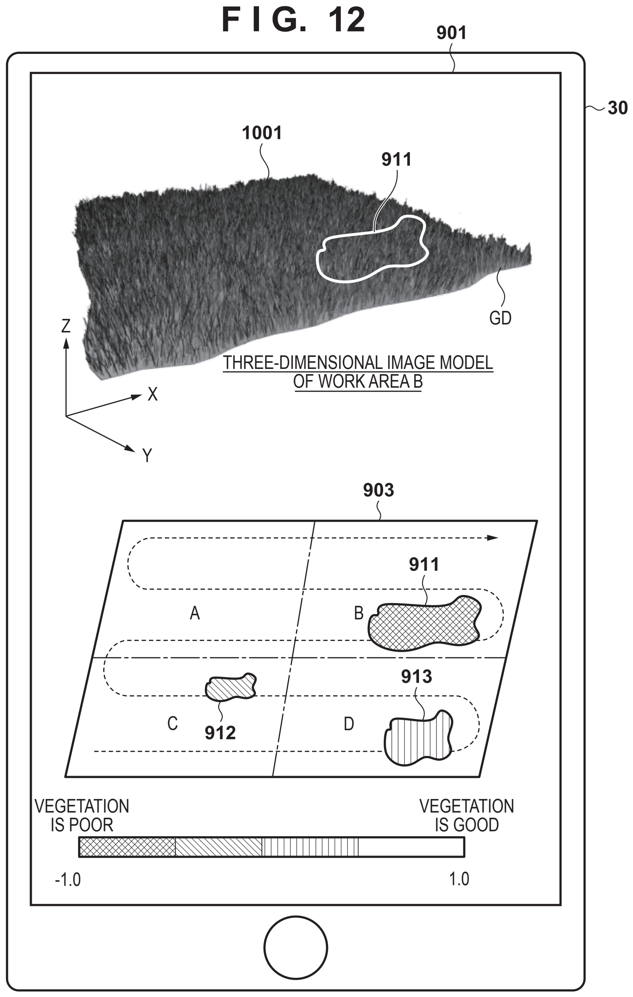

In order to confirm details, for example, as illustrated in FIG. 12, an NDVI image may be superimposed and displayed on a three-dimensional image model 100. In the display example illustrated in FIG. 12, the NDVI image 903 is displayed below the display area 901, and the three-dimensional image model 1011 of the work area B designated by the user (work-related person) is displayed above the display area 901. On the three-dimensional image model 1011, the area 911 having a low NDVI is superimposed and displayed in the work area B. As described above, by superimposing and displaying the three-dimensional image model and the NDVI image (or distribution area of NDVI), the work-related person can visually and easily confirm the area of lawn with poor vegetation in the work area.

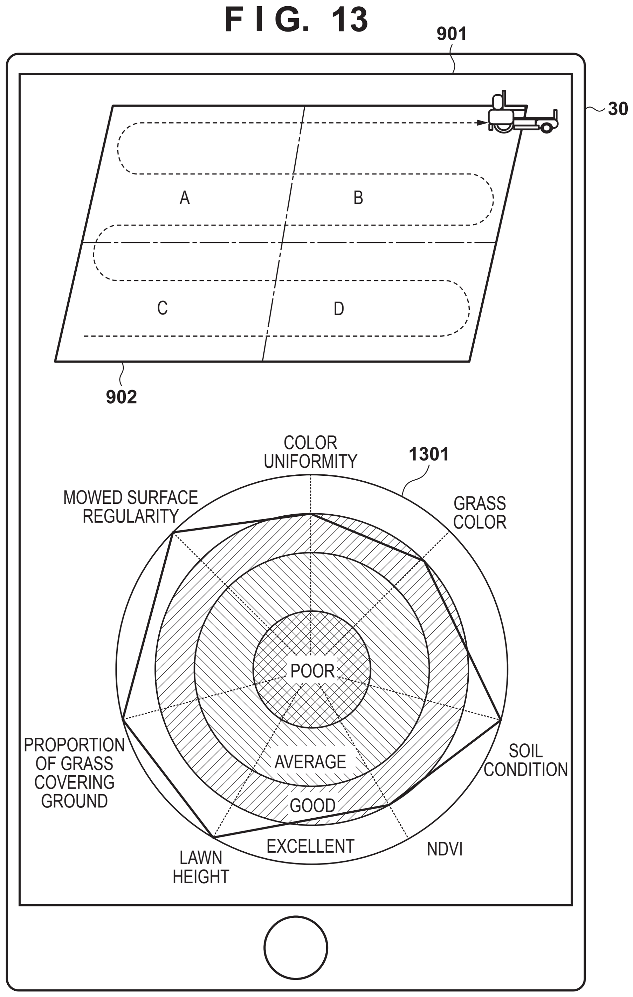

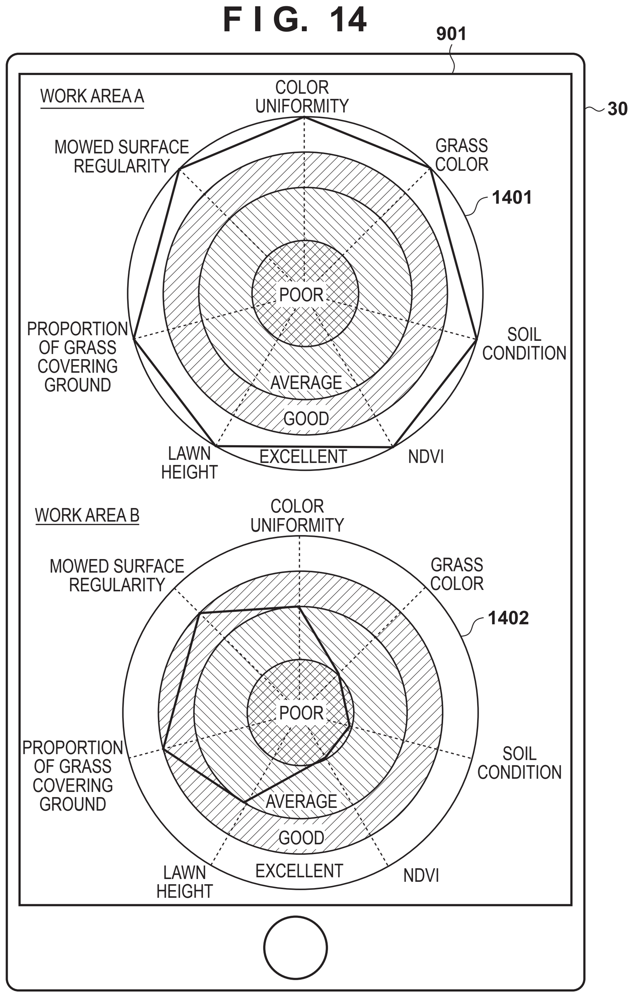

In order to confirm details, for example, as illustrated in FIG. 13, an image (for example, radar chart) obtained by visualizing a quantitative evaluation value acquired by image processing of the visible image 902 may be displayed. In the display example illustrated in FIG. 13, the visible image 902 is displayed on the upper side of the display area 901, and a radar chart 1301 is displayed on the lower side of the display area 901. In the radar chart 1301 illustrated in FIG. 13, as an example of the evaluation items, the uniformity of the color of the lawn, the color of the lawn, the soil condition of the lawn, the height of the mowed lawn, the proportion of the lawn covering the ground (amount of lawn growing in predetermined area), the regularity of the mowed surface, and the like are set as the evaluation items. However, the evaluation items of the radar chart are not limited to these, and can be changed or added according to the setting of the work-related person. In the radar chart 1301, the evaluation value of the evaluation item is evaluated in four grades of excellent, good, average, and poor, but the evaluation value is not limited to this example. The classification of the evaluation value is not limited to this example, and can be added or changed. In addition, the radar chart 1301 illustrated in FIG. 13 visualizes and displays the overall evaluation value of the work site, but the present invention is not limited to the display example of FIG. 13. For example, as illustrated in FIG. 14, the radar chart may be displayed for each of the partial work areas A to D in the work site. In FIG. 14, reference numeral 1401 denotes a radar chart of the work area A, and reference numeral 1402 denotes a radar chart of the work area B. By displaying the radar chart for each work area in one display area 901, it is possible to relatively compare the evaluation values of the evaluation items for each work area.

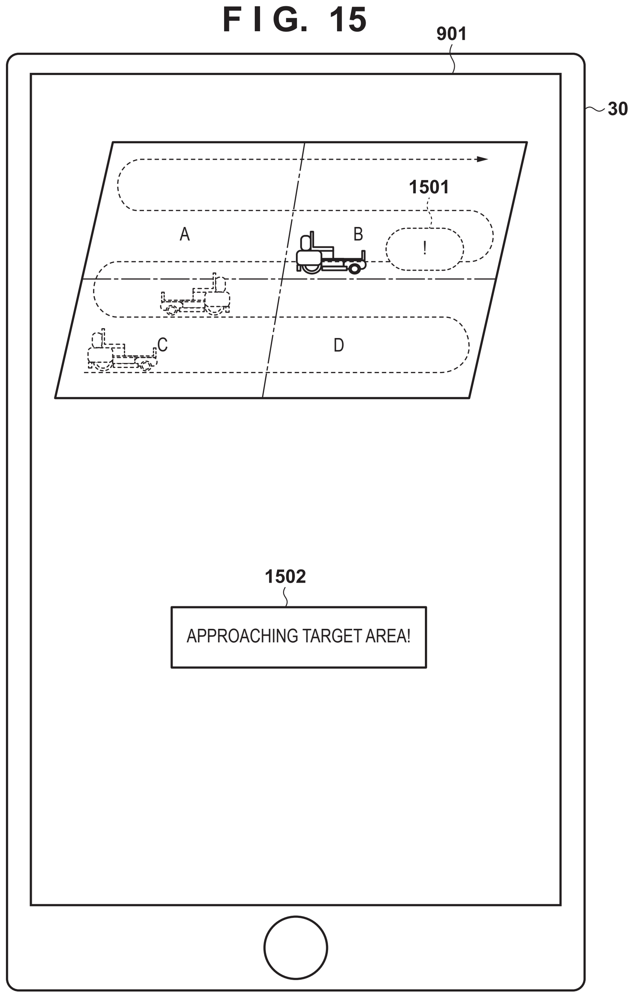

FIG. 15 is a diagram illustrating a display example of notification information displayed on the information processing device 30 before the start of the next work. Reference numeral 1501 indicates an area set as a target area of the next work by the work-related person on the basis of the result of the previous work that has been performed. For example, in the NDVI image 903, when the work-related person sets the area 911 in the work area B as the target area of the next work, the target area 1501 is displayed at a location corresponding to the area 911 in the work area B. In the next work, a flag (for example, "!" display) that can identify the target area 1501 may be displayed in the target area 1501. In addition, in a case where the work machine 20 approaches the target area 1501, the alert 1502 for notifying that the work machine 20 approaches the target area 1501 may pop up in the display area 901 of the information processing device 30. Furthermore, the alert 1502 for notifying that the work machine 20 has approached the attention area may pop up on the display unit 222 of the work machine 20. For example, in a case where the occupant gets on the work machine 20 and performs the operation, the alert 1502 pops up on the display unit 222 of the work machine 20, so that it is possible to confirm in advance that the work machine 20 has approached the target area 1501, and it is possible to operate the work machine 20 so as to more carefully perform the lawn mowing work.

[Modifications]

Although an example in which the server device 10 executes main processing has been described in the above-described embodiment, the present invention is not limited to this example. The work machine 20 may perform processing up to generation of display information. In this case, the display information generated by the work machine 20 may be transmitted to the information processing device 30 via the server device 10 or directly without passing through the server device 10. Similarly, the work machine 20 may plan work, generate notification information, or acquire image information.

In this case, the content of the work planned by the work machine 20, the notification information generated by the work machine 20, or the image information acquired by the work machine 20 may be transmitted to the information processing device 30 via the server device 10 or directly without passing through the server device 10. In addition, the information processing device 30 may execute processing such as generation of display information, planning of work, generation of notification information, and acquisition of image information. Any one of the work machine 20, the server device 10, and the information processing device 30 can execute each process in the above-described embodiment, and a specific apparatus does not necessarily execute the entire processing.

In addition, when the planning unit 1005 plans work in the work site on the basis of the image information of the work site acquired by the image information acquisition unit 1004 and the state of the work site acquired by the state acquisition unit 1001, weather forecast information may be considered. On the basis of the current growth state of the lawn in the work site and the weather forecast information, the planning unit 1005 may predict the growth status of the lawn, and may, for example, plan and notify (propose) the information processing device 30 that the work is to be executed 10 days or half a month later.

In addition, an example in which the server device 10 connected to the work machine 20 via the network 40 mainly executes processing has been described in the above-described embodiment, but the present invention is not limited to this example. For example, the above-described embodiment may be applied to an example in which a plurality of the work machines 20 are connected to each other in a communication-enabling manner, one of the work machines 20 operates as a master work machine, and the other work machines 20 operate as slave work machines. That is, the master work machine may perform the processing of the above-described embodiment (processing mainly executed by server device 10).

In addition, an example in which the server device 10, the work machine 20, and the information processing device 30 are connected in a communication-enabling manner via the network 40 has been described in the above-described embodiment, but the present invention is not limited to this example. For example, an edge server may be provided instead of the server device 10, and a cloud may be configured to accumulate only necessary data. As a result, it is possible to suppress all pieces of data from being concentrated in the cloud. Specifically, the edge server may acquire data from the work machine 20, execute the processing of the above-described embodiment, and store, in the cloud, the acquired data and the processing result in the edge server.

For example, the edge server may generate display information on the basis of a state of a work site, and store the generated display information in the cloud. As a result, the information processing device 30 can acquire necessary data from the cloud. When edge computing is utilized as described above, only necessary data is sent to the cloud while data processing is safely performed at high speed on the edge server side. Thus, the amount of communication can be suppressed, and a load on the network can be reduced.

According to the present embodiment, a work result in a work site can be easily confirmed by visualizing and displaying the work result.

<Summary of Embodiments>

item 1. An information providing method for providing information to a work-related person including any one of a worker who performs work on a work site, a supervisor who supervises the worker, a manager of the work site, and an owner of the work site, the information providing method comprising: an acquisition step of acquiring a state of the work site; a generation step of generating display information to be displayed on a display unit of a terminal, used by the work-related person, based on the state of the work site; and a display step of displaying the display information on the display unit.

item 2. In the information providing method according to the above embodiment, the state of the work site acquired in the acquisition step includes a visible image of a lawn in the work site captured by a stereo camera and a near infrared image captured by a near infrared camera, the stereo camera and the near infrared camera provided in a work machine that performs work in the work site.

item 3. In the information providing method according to the above embodiment, in the generation step, an NDVI index indicating a quality of vegetation of the lawn in the work site is acquired using a red wavelength in the visible image and a near infrared wavelength in the near infrared image, and an NDVI image in which a distribution of the NDVI index in the work site is superimposed is generated using location information of the work site measured by a sensor provided in the work machine and the NDVI index.

item 4. In the information providing method according to the above embodiment, in the generation step, a three-dimensional image model of the lawn in the work site is generated using depth information of the lawn in the work site acquired using a parallax of the stereo camera.

item 5. In the information providing method according to the above embodiment, in the generation step, the three-dimensional image model of the lawn is generated so as to be changeable according to a direction of a designated viewpoint.

item 6. In the information providing method according to the above embodiment, in the generation step, a two-dimensional image model indicating a cross section of the three-dimensional image model at a location designated in the three-dimensional image model is generated.

item 7. In the information providing method according to the above embodiment, the two-dimensional image model includes a two-dimensional image model indicating a vertical cross section of the three-dimensional image model, and a two-dimensional image model indicating a horizontal cross section of the three-dimensional image model.

item 8. In the information providing method according to the above embodiment, in the generation step, an image in which the distribution of the NDVI index is superimposed on the three-dimensional image model is generated.

item 9. In the information providing method according to the above embodiment, the state of the work site acquired in the acquisition step includes color information of the work site, and in the generation step, the three-dimensional image model colored on the basis of the color information of the work site is generated.

item 10. In the information providing method according to the above embodiment, in the generation step, a plurality of evaluation values evaluated for each of a plurality of evaluation items is acquired as the state of the work site, and the plurality of evaluation items and the plurality of evaluation values are generated as the display information.

item 11. In the information providing method according to the above embodiment, in the generation step, a form represented in shapes of sizes proportional to levels of the plurality of evaluation values for each of the plurality of evaluation items is generated as the display information.

item 12. In the information providing method according to the above embodiment, the acquisition step includes a step of acquiring a first state that is the state of the work site at a first time, and a step of acquiring a second state that is the state of the work site at a second time after the first time.

This makes it possible to easily recognize a change in the state of the work site at different times.

item 13. In the information providing method according to the above embodiment, a display area configured to display information includes a first display area configured to display information indicating the first state, and a second display area configured to display information indicating the second state.

This makes it possible to display the states of the work site at different times.

item 14. In the information providing method according to the above embodiment, the first display area and the second display area are displayed in a same screen of the display unit.

This makes it possible to easily compare changes in the states of the work site at different times.

item 15. In the information providing method according to the above embodiment, the first display area and the second display area are individually displayed when the screen of the display unit is swiped.

item 16. In the information providing method according to the above embodiment, the display information includes geographical information indicating a geographical location of the work site, and the display information is generated in such a manner that information indicating the state of the work site is displayed in a superimposed manner on the geographical information.

item 17. In the information providing method according to the above embodiment, the acquisition step further includes a second acquisition step of acquiring image information of the work site, and in the generation step, the display information is generated in such a manner that information indicating the state of the work site is displayed in a superimposed manner on the image information.

item 18. In the information providing method according to the above embodiment, the information providing method further comprises a planning step of planning work in the work site based on the acquired state of the work site, and a second generation step of generating notification information for notifying the terminal of the work in the work site planned in the planning step, wherein the notification information includes information indicating an area to be noted in the work in the work site.

item 19. In the information providing method according to the above embodiment, the information providing method further comprises a notification step of notifying the terminal of the notification information generated in the second generation step.

According to the information providing method of the above embodiment, it is possible to provide a technique that enables easy confirmation of a work result by visualizing and displaying the work result in the work site.

item 20. A server device is configured to provide information to a work-related person including any one of a worker who performs work on a work site, a supervisor who supervises the worker, a manager of the work site, and an owner of the work site, the server device comprising: an acquisition unit configured to acquire a state of the work site; a generation unit configured to generate display information to be displayed on a display unit of a terminal, used by the work-related person, based on the state of the work site; and a display control unit configured to cause the display unit to display the display information.

According to the server device of the above embodiment, it is possible to provide a technique that enables easy confirmation of a work result by visualizing and displaying the work result in the work site.

item 21. An information processing device is configured to provide information to a work-related person including any one of a worker who performs work on a work site, a supervisor who supervises the worker, a manager of the work site, and an owner of the work site, the information processing device comprising: an acquisition unit configured to acquire a state of the work site; a generation unit configured to generate display information to be displayed on a display unit of an information processing device based on the state of the work site; and a display control unit configured to cause the display unit to display the display information.

According to the information processing device of the above embodiment, it is possible to provide a technique that enables easy confirmation of a work result by visualizing and displaying the work result in the work site.

item 22. An information processing system is configured to provide information to a work-related person including any one of a worker who performs work on a work site, a supervisor who supervises the worker, a manager of the work site, and an owner of the work site, the information processing system comprising: an acquisition unit configured to acquire a state of the work site; a generation unit configured to generate display information to be displayed on a display unit of a terminal, used by the work-related person, based on the state of the work site; and a display control unit configured to cause the display unit to display the display information.

According to the information processing system of the above embodiment, it is possible to provide a technique that enables easy confirmation of a work result by visualizing and displaying the work result in the work site.

item 23. A program causes a computer to execute the information providing method according to any one of items 1 to 19.

This makes it possible to implement an information providing method as a program.

item 24. A storage medium stores a program for causing a computer to execute the information providing method according to any one of items 1 to 19.

This makes it possible to implement an information providing method as a storage medium.

<Other Embodiments>

In addition, a program for implementing one or more functions that have been described in each of the embodiments is supplied to a system or a device through a network or via a storage medium, and one or more processors on a computer of the system or the device are capable of reading and executing the program. The present invention can also be implemented according to such an aspect.

The invention is not limited to the foregoing embodiments, and various variations/changes are possible within the spirit of the invention.

The invention is not limited to the foregoing embodiments, and various variations/changes are possible within the spirit of the invention.

**Claims**

1. An information providing method for providing information to a work-related person including any one of a worker who performs work on a work site, a supervisor who supervises the worker, a manager of the work site, and an owner of the work site, the information providing method comprising:

   an acquisition step of acquiring a state of the work site;
   a generation step of generating display information to be displayed on a display unit of a terminal, used by the work-related person, based on the state of the work site; and
   a display step of displaying the display information on the display unit.

2. The information providing method according to claim 1, wherein the state of the work site acquired in the acquisition step includes a visible image of a lawn in the work site captured by a stereo camera and a near infrared image captured by a near infrared camera, the stereo camera and the near infrared camera provided in a work machine that performs work in the work site.

3. The information providing method according to claim 2, wherein

   in the generation step, an NDVI index indicating a quality of vegetation of the lawn in the work site is acquired using a red wavelength in the visible image and a near infrared wavelength in the near infrared image, and
   an NDVI image in which a distribution of the NDVI index in the work site is superimposed is generated using location information of the work site measured by a sensor provided in the work machine and the NDVI index.

4. The information providing method according to claim 3, wherein in the generation step, a three-dimensional image model of the lawn in the work site is generated using depth information of the lawn in the work site acquired using a parallax of the stereo camera.

5. The information providing method according to claim 4, wherein in the generation step, a two-dimensional image model indicating a cross section of the three-dimensional image model at a location designated in the three-dimensional image model is generated.

6. The information providing method according to claim 4 or 5, wherein in the generation step, an image in which the distribution of the NDVI index is superimposed on the three-dimensional image model is generated.

7. The information providing method according to any one of claims 4 to 6, wherein the state of the work site acquired in the acquisition step includes color information of the work site, and
   in the generation step, the three-dimensional image model colored on the basis of the color information of the work site is generated.

8. The information providing method according to any one of claims 1 to 7, wherein in the generation step, a plurality of evaluation values evaluated for each of a plurality of evaluation items is acquired as the state of the work site, and
   the plurality of evaluation items and the plurality of evaluation values are generated as the display information.

9. The information providing method according to any one of claims 1 to 8, wherein
   the acquisition step includes

   a step of acquiring a first state that is the state of the work site at a first time, and
   a step of acquiring a second state that is the state of the work site at a second time after the first time.

10. The information providing method according to any one of claims 1 to 9, wherein

the display information includes geographical information indicating a geographical location of the work site, and
the display information is generated in such a manner that information indicating the state of the work site is displayed in a superimposed manner on the geographical information.

11. The information providing method according to any one of claims 1 to 10, further comprising

a planning step of planning work in the work site based on the acquired state of the work site, and
a second generation step of generating notification information for notifying the terminal of the work in the work site planned in the planning step, wherein
the notification information includes information indicating an area to be noted in the work in the work site.

12. A server device configured to provide information to a work-related person including any one of a worker who performs work on a work site, a supervisor who supervises the worker, a manager of the work site, and an owner of the work site, the server device comprising:

an acquisition unit configured to acquire a state of the work site;
a generation unit configured to generate display information to be displayed on a display unit of a terminal, used by the work-related person, based on the state of the work site; and
a display control unit configured to cause the display unit to display the display information.

13. An information processing device configured to provide information to a work-related person including any one of a worker who performs work on a work site, a supervisor who supervises the worker, a manager of the work site, and an owner of the work site, the information processing device comprising:

an acquisition unit configured to acquire a state of the work site;
a generation unit configured to generate display information to be displayed on a display unit of an information processing device based on the state of the work site; and
a display control unit configured to cause the display unit to display the display information.

14. An information processing system configured to provide information to a work-related person including any one of a worker who performs work on a work site, a supervisor who supervises the worker, a manager of the work site, and an owner of the work site, the information processing system comprising:

an acquisition unit configured to acquire a state of the work site;
a generation unit configured to generate display information to be displayed on a display unit of a terminal, used by the work-related person, based on the state of the work site; and
a display control unit configured to cause the display unit to display the display information.

15. A program for causing a computer to execute the information providing method according to any one of claims 1 to 11.

16. A storage medium storing a program for causing a computer to execute the information providing method according to any one of claims 1 to 11.

# F I G. 1

NETWORK

40

10

20

211

211

219

30a

30b

30c

U

Rr ← → Fr

D

# F I G. 2

20

FRONT SENSOR — 211

202 ~ | 201

213a

BLADE MOTOR — 212a

213c | 213b

212c — BLADE MOTOR | BLADE MOTOR — 212b

222 ~ DISPLAY UNIT

214 ~ ECU | COMMUNICATION DEVICE — 217

215 ~ BATTERY

STORAGE DEVICE — 221

216 ~ GNSS SENSOR

218b | 218a

204 ~ | TRAVEL MOTOR | TRAVEL MOTOR | ~ 203

219

STATE SENSOR

Fr
Lt ← → Rt
Rr

REAR SENSOR — 220

# FIG. 3

SERVER DEVICE — 10

CPU — 101

COMMUNICATION UNIT — 103

STORAGE DEVICE — 102

# FIG. 4

INFORMATION PROCESSING DEVICE — 30

CPU — 301

COMMUNICATION UNIT — 303

STORAGE DEVICE — 302

DISPLAY UNIT — 304

OPERATION INPUT UNIT — 305

# FIG. 5

SERVER DEVICE — 10

STATE ACQUISITION UNIT — 1001

IMAGE INFORMATION ACQUISITION UNIT — 1004

DISPLAY INFORMATION GENERATION UNIT — 1002

PLANNING UNIT — 1005

DISPLAY CONTROL UNIT — 1003

NOTIFICATION INFORMATION GENERATION UNIT — 1006

NOTIFICATION UNIT — 1007

**F I G. 6**

```
                              ┌─────────────┐
                              │    START    │
                              └─────────────┘
                                     │
                              ┌─────────────────┐
                              │     MOWING      │─── S610
                              └─────────────────┘
                                     │
                              ┌──────────────────────────┐
                              │  ACQUIRE IMAGE INFORMATION │─── S620
                              └──────────────────────────┘
                                     │
                              ┌───────────────────┐    S630
                    NO        ╱     UPLOAD?        ╲
              ┌──────────────◄                      ►
              │      S640     ╲                    ╱
              │               └───────────────────┘
      ┌───────────────────────┐       │ YES
      │  SAVE IN STORAGE DEVICE │
      └───────────────────────┘
              │
      ┌──────────────────────────┐
      │  DELETE IMAGE INFORMATION │       ┌──────────────────┐
      └──────────────────────────┘       │  S750 OF FIG. 7  │
           S650                           └──────────────────┘
                                                │
                              ┌──────────────────────────┐
                              │ NOTIFY WORK-RELATED PERSON │─── S660
                              └──────────────────────────┘
                                     │
                    NO        ╱   CONFIRM MOWING    ╲    S670
              ┌──────────────◄      RESULT?          ►
              │               ╲                     ╱
              │               └────────────────────┘
              │                      │ YES
              │               ┌──────────────────────────┐
              │               │   DISPLAY INFORMATION     │─── S680
              │               │   GENERATION/MODELING     │
              │               └──────────────────────────┘
              │                      │
              │               ┌──────────────────────────┐
              │               │ TRANSMIT DISPLAY INFORMATION │─── S690
              │               └──────────────────────────┘
                                     │
                              ┌──────────────────┐
                              │  S710 OF FIG. 7  │
                              └──────────────────┘
```

# F I G. 7

S690 OF FIG. 6

DISPLAY DISPLAY INFORMATION — S710

S720

CONFIRM DISPLAY INFORMATION TARGET PORTION IN IN DETAIL?

NO

YES

THREE-DIMENSIONAL DISPLAY AND CUT SURFACE DISPLAY — S730

S740

IS ATTENTION NEEDED IN NEXT WORK?

NO

YES

TO S660 OF FIG. 6 ← SET FLAG AND ALERT — S750

END

# F I G. 8

EP 4 769 336 A1

# F I G. 9

VEGETATION
IS POOR

VEGETATION
IS GOOD

-1.0

1.0

# F I G. 10

901

30

904

1001

A

A

GD

THREE-DIMENSIONAL IMAGE MODEL
OF WORK AREA B

Z

X

Y

# F I G. 11

901

~30

1001

A

A

GD

Z

X

Y

THREE-DIMENSIONAL IMAGE MODEL
OF WORK AREA B

AVERAGE HEIGHT L1    1002

Z

GD

AA CROSS SECTION

X

# FIG. 12

THREE-DIMENSIONAL IMAGE MODEL
OF WORK AREA B

VEGETATION
IS POOR

VEGETATION
IS GOOD

-1.0

1.0

# F I G. 13

# F I G. 14

# F I G. 15

APPROACHING TARGET AREA!

# F I G. 16

Europäisches
Patentamt
European
Patent Office
Office européen
des brevets

# EUROPEAN SEARCH REPORT

**Application Number**

EP 25 22 4185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 837 945 B1 (STIGA S P A IN BREVE ANCHE ST S P A [IT]) 12 April 2023 (2023-04-12) * abstract * * paragraph [0032] - paragraph [0047]; figures 2a, 3,5 * * paragraph [0092] - paragraph [0097] * ----- | 1-16 | INV. G06V20/10 A01D34/00 G05D1/00 |
| X,D | EP 3 854 196 A1 (HONDA MOTOR CO LTD [JP]) 28 July 2021 (2021-07-28) * paragraph [0022] - paragraph [0046] * ----- | 1,12-16 | |

| | |
|---|---|
| | TECHNICAL FIELDS SEARCHED (IPC) |
| | G06V A01D G05D |

The present search report has been drawn up for all claims

| Place of search | Date of completion of the search | Examiner |
|---|---|---|
| The Hague | 13 May 2026 | Boltz, Sylvain |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 22 4185

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2026

| Patent document cited in search report | | Publication date | Patent family member(s) | | Publication date |
|---|---|---|---|---|---|
| EP 3837945 | B1 | 12-04-2023 | EP | 3837945 A1 | 23-06-2021 |
| | | | EP | 4111843 A1 | 04-01-2023 |
| | | | IT | 201900024853 A1 | 19-06-2021 |
| EP 3854196 | A1 | 28-07-2021 | EP | 3854196 A1 | 28-07-2021 |
| | | | JP | 7184920 B2 | 06-12-2022 |
| | | | JP | WO2020090038 A1 | 16-09-2021 |
| | | | US | 2021235617 A1 | 05-08-2021 |
| | | | US | 2024393792 A1 | 28-11-2024 |
| | | | WO | 2020090038 A1 | 07-05-2020 |

EPO FORM P0459

For more details about this annex : see Official Journal of the European Patent Office, No. 12/82